# EUROPEAN PATENT SPECIFICATION

(11) **EP 0 727 575 B1**
(45) Date of publication and mention of the grant of the patent: **20.01.1999**
(21) Application number: 96300962.6
(22) Date of filing: 13.02.1996
(51) Int. Cl.: F02F 11/00, F16J 15/32

(54) **A shaft seal arrangement**
Wellenabdichtung
Agencement de joint d'étanchéité pour un arbre

(30) Priority: 16.02.1995 GB 9503050
(43) Date of publication of application: 21.08.1996
(73) Proprietor: FORD MOTOR COMPANY LIMITED, Brentwood, Essex CM13 3BW (GB); FORD FRANCE S. A., 92506 Rueil-Malmaison Cédex (FR); FORD-WERKE AKTIENGESELLSCHAFT, 50735 Köln (DE)
(72) Inventor: Lansdale, William Bruce, Runwell, Wickford, Essex SS11 7PU (GB)
(74) Representative: Messulam, Alec Moses

(56) References cited:
- EP-A- 0 513 438
- EP-A- 0 615 084
- EP-A- 0 615 085
- DE-A- 4 212 973

## Description

This invention relates to a shaft seal arrangement for use in providing an oil seal around a shaft of an engine, particularly a motor vehicle engine.

In order to provide an effective and long lasting seal for a rotating shaft, it is necessary for the seal to be mounted precisely concentrically with the shaft.

It is also desirable to ensure that the mounting of the shaft seal, whether on original assembly or on replacement during the service life of the engine, is properly centred without requiring excessive accuracy or an excessively high level of skill on the part of the assembler.

Shaft seals are often fitted in an engine cover plate mounted to one end of the engine block. An application to which this invention is particularly suited is the front end crankshaft seal of an engine, where components such as timing wheels are in lubrication communication with the engine oil supply.

According to the present invention, there is provided a shaft seal arrangement for an engine shaft, the arrangement comprising an engine cover plate with a circular dished recess in the plate, the recess having a bottom surface, an opening in the bottom surface through which the shaft can pass and an annular wall forming an edge of the recess, the arrangement also including a shaft seal unit, wherein the seal unit comprises a primary seal for engaging with the shaft and a secondary seal, the seal unit being adapted to fit within the circular recess in the plate with the periphery of the unit locating within the recess to centre the unit in the recess and the secondary seal making a seal with the bottom surface of the recess.

The seal unit can be secured to the plate by a twist-lock connection, and can have a circular periphery which makes substantially 360° contact with the internal walls of the circular recess.

The secondary seal preferably makes sealing contact both with the bottom surface of the recess and with the annular wall and can be an annular seal ring retained in the seal unit.

The cover plate is preferably a laminated construction with a layer of sound absorbing material between layers of steel plate.

The invention also provides a method of installing a shaft seal around a crankshaft extending through a crankshaft cover plate wherein the cover plate has a circular recess, the recess having a bottom surface, a circular opening in the bottom surface through which the shaft can pass and an annular wall forming an edge of the recess, and wherein the shaft seal is formed as part of an annular seal body, the method including the steps of attaching the cover loosely to the body, locating a seal unit over the crankshaft and introducing the unit axially into the circular recess so that the periphery of the seal body locates with the annular wall thereby to position the cover plate with the opening in the recess concentric with the shaft axis, and then securing the cover tightly to the body.

The seal unit is preferably provided with a lip support for the shaft seal lip, the lip support is left in place whilst the seal unit is located over the crankshaft and whilst the cover is secured to the body, and is removed after the cover has been secured.

The invention will now be further described, by way of example, with reference to the accompanying drawings, in which:
Figure 1 is a perspective view of an engine cover plate forming part of a shaft seal arrangement in accordance with the invention;
Figure 2 is an elevation of the cover plate of Figure 1 showing the recess therein;
Figure 3 is a section through a shaft seal arrangement in accordance with the invention; and
Figure 4 is an elevation showing the rear side of the shaft seal unit.

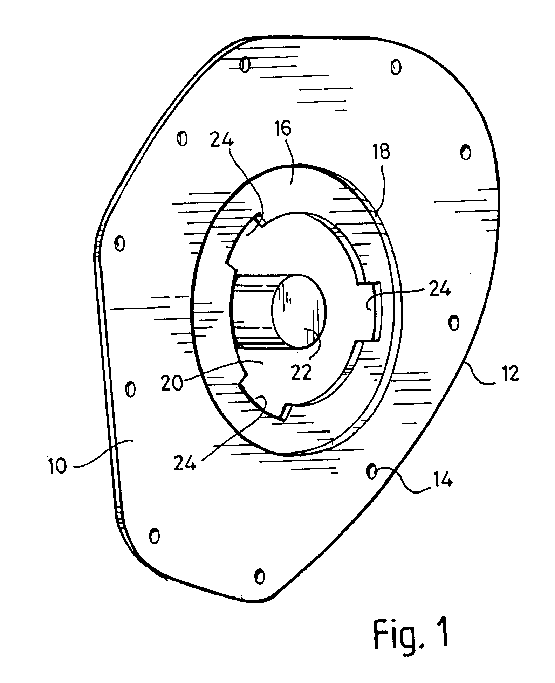

Figure 1 shows an end cover 10 which is to be secured around its periphery 12 to an engine block, using bolts which will pass through bolt holes 14. The shape and size of the cover plate will vary widely from engine to engine and the shape given in Figure 1 is given purely by way of example. At the centre of the cover plate 10 is a dished or recessed area 16 bounded by a circumferential wall 18. At the centre of the dished area 16 is a cut out area 20, and a shaft 22 (for example an end of a crankshaft for a vehicle engine, or a component secured to and rotating with the crankshaft) extends through this cut out area. It will be seen that the cut out area has a generally circular shape with notches 24 at three positions around its circumference.

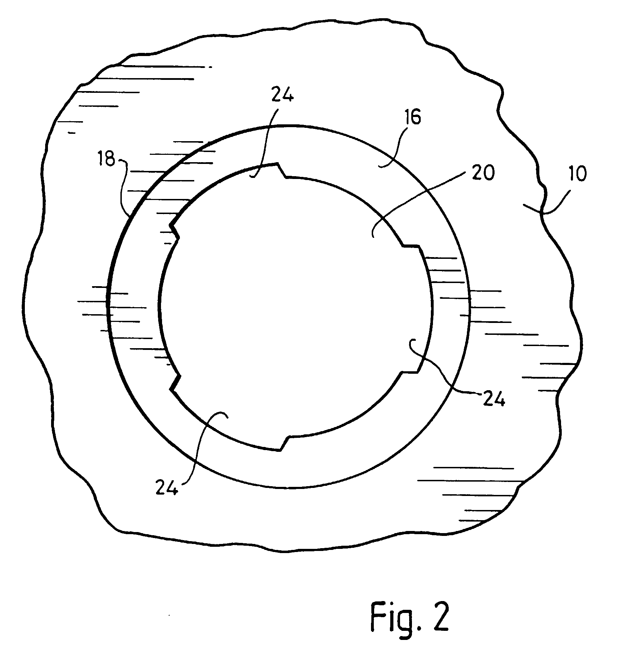

Figure 2 shows this in more detail with only a scrap portion of the cover plate 10 being shown, but the shape of the cut out area 20 is more clearly apparent in this figure.

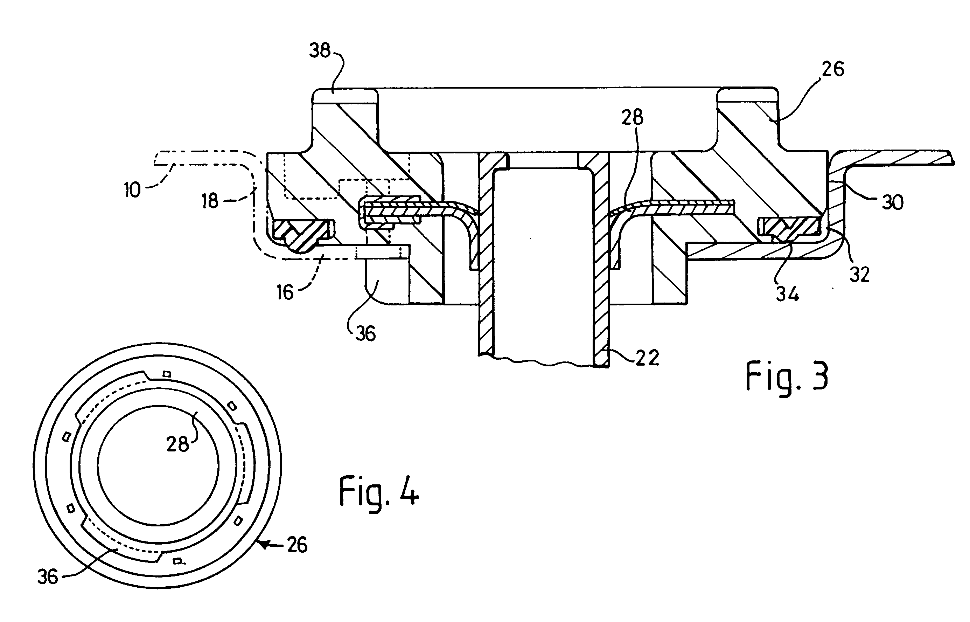

Figure 3 shows the seal unit installed in the central area of the plate 10. The seal unit comprises a body 26, normally of moulded plastics, a primary seal ring 28 and a secondary seal ring 34. In this embodiment, the primary seal itself is formed by two flexible lip seals which make contact with the external surface of the crankshaft 22, but the form and material of these seals does not form part of the present invention. These lip seals will normally be supported and protected by an annular lip support which will be fitted within the lips during transport and storage. The support may also be used to guide the primary seals into place on the crankshaft.

The seal body 26 is shown received within the recess 16 in the plate 10, and it will be seen that an external peripheral edge 30 of the body 26 is a tight fit within the walls 18 of the recess 16. It will be seen that the leading edge (the lower edge in Figure 3) of the outer periphery of the body 26 has a taper at 32 to assist entry of the housing into the recess 16. An annular secondary seal 34 is, when the seal unit is properly fitted in the recess 16, compressed between the body 26 and the internal surface of the recess 16 to form a fluid tight seal. Because the secondary seal is in compression between the body 26 and the floor of the recess 16, good sealing contact is assured when the body is properly installed.

To install the body, there are radially extending undercut tabs 36 (Figure 4) on the underside of the body 26, and these tabs co-operate with the notches 24 in the cover plate 10.

In use, the cover plate 10 is fitted to the engine block with bolts passed through some (possibly only two) of the holes 14 and loosely screwed into the threaded bores on the engine block which are provided for these bolts. At this stage, the bolts are not tightened, and the cover plate 10 has some freedom of movement in its own plane.

Next the housing 26 is slid axially over the shaft end 22 in an orientation such that the tabs 36 pass through the notches 24. The body 26 is then rotated through something less than 120° in order to locate the undercut tabs 36 behind the plate 10. The faces of the undercut tabs which make contact with the underside of the recess 16 have a tapered form and the material of the cover plate around the opening 20 is parallel sided, so that as the body is rotated the body rides on its tapered surfaces and is drawn toward the floor of the recess, thus compressing the secondary seal 34. In this way the body 26 is secured in the recess against axial movement relative to the plate 10. The body is secured against radial movement by the co-operation between the periphery 30 of the body and the walls 18 of the recess.

There may be a click-stop arrangement between the plate 10 and the body 26, to prevent accidental reverse rotation of the body after it has been installed.

The engagement between the seal 28 and the periphery of the shaft 22 will have a centring action centring the seal relative to the shaft. Once the body 26 has been put in place, the bolts securing the cover plate to the engine block can be finally tightened. The plate will then hold the seal in the correct position relative to the shaft.

If, subsequently, the seal has to be replaced it can be easily removed from the plate 10 by rotating it in a direction opposite to that used for assembly whereupon the seal unit can be removed and replaced.

The body 26 may incorporate hand/finger grips at 38 to assist rotation of the body.

This construction enables a shaft seal to be fitted accurately, reliably and quickly without any significant degree of skill being required.

## Claims

1. A shaft seal arrangement for an engine shaft, the arrangement comprising an engine cover plate (10) with a circular dished recess (16) in the plate, the recess having a bottom surface, an opening (20) in the bottom surface through which the shaft can pass and an annular wall (18) forming an edge of the recess, the arrangement also including a shaft seal unit (26), wherein the seal unit comprises a primary seal (28) for engaging with the shaft and a secondary seal (34), the seal unit being adapted to fit within the circular recess in the plate with the periphery of the unit locating within the recess to centre the unit in the recess and the secondary seal making a seal with the bottom surface of the recess (16).

2. A seal arrangement as claimed in Claim 1, wherein the seal unit (26) is secured to the plate (10) by a twist-lock connection (24,36).

3. A seal arrangement as claimed in Claim 1 or Claim 2, wherein the seal unit (26) has a circular periphery which makes substantially 360° contact with the internal walls (18) of the circular recess (16).

4. A seal arrangement as claimed in any preceding claim, wherein the secondary seal (34) makes sealing contact both with the bottom surface of the recess (16) and with the annular wall (18).

5. A seal arrangement as claimed in any preceding claim, wherein the secondary seal is an annular seal ring (34) retained in the seal unit (26).

6. A seal arrangement as claimed in any preceding claim, wherein the cover plate (10) is a laminated construction with a layer of sound absorbing material between layers of steel plate.

7. A method of installing a shaft seal around a crankshaft (22) extending through a crankshaft cover plate (10) which is to be secured to an engine block, wherein the cover plate has a circular recess (16), the recess having a bottom surface, a circular opening (20) in the bottom surface through which the shaft can pass and an annular wall (18) forming an edge of the recess, and wherein the shaft seal is formed as part of an annular seal unit (26), the method including the steps of attaching the cover (10) loosely to the body, locating the seal unit over the crankshaft and introducing the unit axially into the circular recess (16) so that the periphery of the seal unit locates with the annular wall (18) thereby to position the cover plate (10) with the recess concentric with the shaft axis, and then securing the cover tightly to the block.

8. A method as claimed in Claim 7, wherein the seal unit (26) is provided with a lip support for the shaft seal lip, the lip support is left in place whilst the seal unit is located over the crankshaft and whilst the cover (10) is secured to the block, and is removed after the cover has been secured.

## Patentansprüche

1. Eine Wellendichtring-Vorrichtung für eine Motorwelle, wobei die Vorrichtung eine Abdeckplatte (10) für den Motor enthält mit einer kreisförmigen, hohlflächigen Vertiefung (16) in der Platte, wobei die Vertiefung eine Bodenfläche, eine Öffnung (20) in der Bodenfläche hat, durch die die Welle gehen kann und eine ringförmige Wand (18), die eine Kante der Vertiefung bildet, wobei die Vorrichtung ebenfalls eine Wellendichtring-Vorrichtung (26) enthält, in der die Dichtungseinheit eine Hauptdichtung (28) enthält, die mit der Welle in Kontakt steht und eine Nebendichtung (34), wobei die Dichtungseinheit so ausgelegt ist, dass sie in die kreisförmige Vertiefung in der Platte passt, wobei der Rand der Einheit in die Vertiefung kommt, um die Einheit in der Vertiefung zu zentrieren und wobei die Nebendichtung eine Dichtung mit der Bodenfläche der Vertiefung (16) bildet.

2. Eine Dichtungseinheit nach Anspruch 1, in der die Dichtungseinheit (26) an der Platte (10) durch einen Bajonettverschluss (24, 36) befestigt ist.

3. Eine Dichtungsvorrichtung nach Anspruch 1 oder 2, in der die Dichtungseinheit (26) einen kreisförmigen Rand hat, der im wesentlichen einen Kontakt von 360° mit den Innenwänden (18) der kreisförmigen Vertiefung (16) bildet.

4. Eine Dichtungsvorrichtung nach irgendeinem der vorausgegangenen Ansprüche, in der die Nebendichtung (34) einen Dichtungskontakt mit der Bodenfläche der Vertiefung (16) und mit der ringförmigen Wand (18) bildet.

5. Eine Dichtungsvorrichtung nach irgendeinem der vorausgegangenen Ansprüche, in der die Nebendichtung ein Dichtungsring (34) ist, der in der Dichtungseinheit (26) festgehalten wird.

6. Eine Dichtungsvorrichtung nach irgendeinem der vorausgegangenen Ansprüche, in der die Abdeckplatte (10) aus Blech hergestellt ist, mit einer Schicht schalldämpfenden Werkstoffs zwischen den Schichten der Stahlplatte.

7. Eine Methode zum Einbau eines Wellendichtrings um eine Kurbelwelle (22), die sich durch eine Abdeckplatte (10) einer Kurbelwelle erstreckt, die an einem Motorblock befestigt werden soll, in der die Abdeckplatte eine kreisförmige Vertiefung (16) hat, wobei die Vertiefung eine Bodenfläche, eine kreisförmige Öffnung (20) in der Bodenfläche hat, durch die die Welle gehen kann und eine ringförmige Wand (18), die einen Rand der Vertiefung bildet und in der der Wellendichtring als ein Teil einer ringförmigen Dichtungseinheit (26) gebildet ist, wobei die Methode die Schritte der lockeren Befestigung des Deckels (10) am Körper, das Anbringen der Dichtungseinheit über der Kurbelwelle und das axiale Einführen der Einheit in die kreisförmige Vertiefung (16) beinhaltet, so dass der Rand der Dichtungseinheit auf der ringförmigen Wand (18) liegt, wodurch die Stellung der Abdeckplatte (10) mit der konzentrischen Vertiefung mit der Wellenachse positioniert wird und danach die straffe Befestigung des Deckels am Block.

8. Eine Methode nach Anspruch 7, in der die Dichtungseinheit (26) mit einer Lippenstütze für die Wellendichtringlippe geliefert wird, die Lippenstütze wird an ihrem Platz gelassen, während die Dichtungseinheit über der Kurbelwelle angebracht und während der Deckel (10) am Block befestigt wird und wird entfernt, nachdem der Deckel befestigt wurde.

## Revendications

1. Agencement de joint d'arbre destiné à un arbre de moteur, l'agencement comprenant une plaque couvre-joint de moteur (10) comportant un évidement embouti circulaire (16) dans la plaque, l'évidement présentant une surface de fond, une ouverture (20) dans la surface de fond au travers de laquelle l'arbre peut passer, et une paroi annulaire (18) formant un bord de l'évidement, l'agencement comprenant en outre une unité de joint d'arbre (26), dans laquelle l'unité de joint comprend un joint primaire (28) destiné à venir en contact avec l'arbre et un joint secondaire (34), l'unité de joint étant conçue pour s'adapter à l'intérieur de l'évidement circulaire dans la plaque, la périphérie de l'unité s'adaptant à l'intérieur de l'évidement de façon à centrer l'unité dans l'évidement, et le joint secondaire établissant un joint avec la surface de fond de l'évidement (16).

2. Agencement de joint selon la revendication 1, dans lequel l'unité de joint (26) est fixée à la plaque (10) par une fixation à baïonnette (24, 36).

3. Agencement de joint selon la revendication 1 ou la revendication 2, dans lequel l'unité de joint (26) présente une périphérie circulaire qui établit un contact sur pratiquement 360° avec les parois internes (18) de l'évidement circulaire (16).

4. Agencement de joint selon l'une quelconque des revendications précédentes, dans lequel le joint secondaire (34) établit un contact étanche à la fois avec la surface de fond de l'évidement (16) et avec la paroi annulaire (18).

5. Agencement de joint selon l'une quelconque des revendications précédentes, dans lequel le joint secondaire est une bague de joint annulaire (34) retenue dans l'unité de joint (26).

6. Agencement de joint selon l'une quelconque des revendications précédentes, dans lequel la plaque couvre-joint (10) est d'une conception stratifiée, comportant une couche de matériau d'isolation phonique entre des couches de tôle d'acier.

7. Procédé d'installation d'un joint d'arbre autour d'un vilebrequin (22) s'étendant au travers d'une plaque couvre-joint de vilebrequin (10) qui doit être fixée à un bloc moteur, dans lequel la plaque couvre-joint comporte un évidement circulaire (16), l'évidement présentant une surface de fond, une ouverture circulaire (20) dans la surface de fond au travers de laquelle l'arbre peut passer, et une paroi annulaire (18) formant un bord de l'évidement, et dans lequel le joint d'arbre est réalisé sous forme d'une unité de joint annulaire (26), le procédé comprenant les étapes consistant à fixer le couvre-joint (10) au corps de façon lâche, à placer l'unité de joint sur le vilebrequin et à introduire l'unité de façon axiale dans l'évidement circulaire (16) de façon que la périphérie de l'unité de joint s'adapte à la paroi annulaire (18) pour positionner ainsi la plaque couvre-joint (10), l'évidement étant concentrique à l'axe de l'arbre, et à fixer ensuite le couvre-joint au bloc en le serrant.

8. Procédé selon la revendication 7, dans lequel l'unité de joint (26) est munie d'un support de lèvre destiné à la lèvre de l'arbre de joint, le support de lèvre est laissé en place pendant que l'unité de joint est placée sur le vilebrequin et pendant que le couvre-joint (10) est fixé au bloc, et est enlevé après que le couvre-joint ait été fixé.
